# EUROPÄISCHE PATENTSCHRIFT

(11) **EP 2 753 533 B1**
(45) Veröffentlichungstag und Bekanntmachung des Hinweises auf die Patenterteilung: **25.11.2015**
(21) Anmeldenummer: 12766377.1
(22) Anmeldetag: 21.08.2012
(51) Int. Cl.: B62D 15/02, B60T 7/12, G08G 1/16, G06K 9/00, B60R 21/015, B60R 16/00, B60T 7/22, B60W 30/06, B60W 30/18, B60W 50/00

(54) **BESTIMMUNG DER STELLUNG VON BAUELEMENTEN EINES FAHRZEUGS**
DETERMINATION OF THE POSITION OF STRUCTURAL ELEMENTS OF A VEHICLE
DÉTERMINATION DE LA POSITION D'ÉLÉMENTS STRUCTURAUX D'UN VÉHICULE

(30) Priorität: 08.09.2011 DE 102011112578
(43) Veröffentlichungstag der Anmeldung: 16.07.2014
(73) Patentinhaber: Conti Temic Microelectronic GmbH, 90411 Nürnberg (DE); Continental Teves AG & Co. oHG, 60488 Frankfurt am Main (DE)
(72) Erfinder: RANDLER, Martin, 88090 Immenstaad (DE); GREWE, Ralph, 88131 Lindau (DE); FISCHER, Marc, 88149 Nonnenhorn (DE); ULBRICHT, Dirk, 88239 Wangen (DE); ECKERT, Alfred, 55129 Mainz-Hechtsheim (DE); BAYER, Ronald, 63165 Mühlheim/Main (DE); LÜKE, Stefan, 61191 Rosbach vor der Höhe (DE); PILLER, Bernd, 63303 Dreieich (DE); HALASY-WIMMER, Georg, 71665 Vaihingen (DE)
(74) Vertreter: Büchner, Jörg
(86) Internationale Anmeldenummer: PCT/DE2012/100245
(87) Internationale Veröffentlichungsnummer: WO 2013/034141

(56) Entgegenhaltungen:
- JP-A- 2003 264 827
- JP-A- 2006 213 071
- JP-A- 2008 152 628
- JP-A- 2009 114 783
- US-A1- 2005 074 142

## Beschreibung

Die Erfindung betrifft eine Vorrichtung und ein Verfahren, zur Bestimmung einer Stellung eines oder mehrerer Bauelemente eines Fahrzeugs, die in ihrer Stellung verändert werden können und bei denen eine Veränderung der Stellung eine Änderung von äußeren Abmessungen des Fahrzeugs bewirkt.

Vorrichtungen und Verfahren zur Bestimmung der Stellung von Fahrzeugbauelementen, insbesondere von äußeren Anbauelementen wie Fahrzeugtüren, Abdeckungen und Seitenrückspiegeln, sind aus dem Stand der Technik bekannt. Die Stellung von Fahrzeugtüren, insbesondere ob diese geöffnet oder geschlossen sind, wird beispielsweise mittels spezieller Sensoreinrichtungen im Bereich der jeweiligen Fahrzeugtür bestimmt, z.B. mittels Kontaktschalter. Ähnliche Ansätze existieren für die Bestimmung der Stellung von Tankdeckeln, Kofferraumabdeckungen und Seitenspiegeln.

Die US 2005/0074142 A1 offenbart in diesem Zusammenhang bereits ein Verfahren zur Bestimmung der Position eines Objekts im Fahrzeuginnenraum, insbesondere des Öffnungszustands einer Fahrzeugtür, mittels einer im Fahrzeuginnenraum angeordneten Kamera. Mittels der Innenraumkamera wird dabei eine Sequenz von Einzelbildern der Fahrzeugtür erfasst. Die Ermittlung des Öffnungszustands der Fahrzeugtür erfolgt dabei mittels Erzeugung und Auswertung eines Differenzbildes, d.h. durch Vergleich eines aktuellen Bildes der Fahrzeugtür mit einem früher erfassten und abgespeicherten Bild der Fahrzeugtür.

Ist die Stellung des jeweiligen Bauelements bestimmt, können, sofern dies erforderlich ist, Hinweise an Fahrzeuginsassen ausgegeben werden. Bekannt ist beispielsweise die Ausgabe von Hinweisen, dass eine oder mehrere Fahrzeugtüren nicht richtig bzw. nicht vollständig geschlossen sind, insbesondere wenn der Fahrzeugführer das Fahrzeug trotzdem in Bewegung setzt. Weiterhin können verschiedene Fahrerassistenzsysteme Informationen über die Stellung der Bauelemente für bestimmte Funktionen weiterverarbeiten. Dies erfolgt beispielsweise im Hinblick auf eine Veränderung der äußeren Abmessungen des Fahrzeugs je nach Stellung der Bauelemente. So kann bei der Ermittlung der Durchfahrtsbreite und/oder der Durchfahrtshöhe des Fahrzeugs, z.B. für die Umsetzung von autonomen oder teilautonomen Fahrmanövern oder beispielsweise zur Ausgabe von Hinweisen beim Durchfahren eines Tunnels und von Engstellenbereichen, die Stellung der Bauelemente und deren Einfluss auf die äußeren Abmessungen des Fahrzeugs berücksichtigt werden.

Ein wesentlicher Nachteil bei den bekannten Vorrichtung und Verfahren ist die Tatsache, dass jedes Mal separate Sensoreinrichtungen im Bereich des jeweiligen Bauelements des Fahrzeugs angeordnet sein müssen, mittels derer die Stellung bestimmt wird. Das ist mit entsprechenden Kosten verbunden und benötigt zusätzlichen Bauraum. Ein weiterer Nachteil besteht darin, dass derartige Sensoreinrichtungen häufig anfällig sind, beispielsweise für Feuchtigkeit oder Stoßbelastungen, und mit der Zeit Defekte aufweisen können. In dem Fall kann die Stellung der Bauelemente falsch oder gar nicht mehr bestimmt werden.

Der Erfindung liegt demnach die Aufgabe zugrunde, eine Lösung anzugeben, mit welcher die Stellung von Bauelementen eines Fahrzeugs bestimmt werden kann, wobei die Nachteile der aus dem Stand der Technik bekannten Lösungen möglichst vermieden werden.

Diese Aufgabe wird durch eine Vorrichtung mit den Merkmalen nach Anspruch 1 und durch ein Verfahren mit den Merkmalen nach Anspruch 6 gelöst. Vorteilhafte Ausgestaltungen und Weiterbildungen sind Gegenstand von Unteransprüchen, wobei auch Kombinationen und Weiterbildungen einzelner Merkmale miteinander denkbar sind.

Ein wesentlicher Gedanke der Erfindung besteht darin, die Stellung von Bauelementen eines Fahrzeugs, insbesondere von Bauelementen, bei denen eine Veränderungen der Stellung eine Veränderung der äußeren Abmessungen des Fahrzeugs bewirkt, mittels wenigstens einer Kamera, die am oder im Fahrzeug angeordnet ist, zu bestimmen. Kameras werden heutzutage bereits vielfach in Fahrzeugen verbaut und im Zusammenhang mit unterschiedlichen Fahrerassistenzsystem bzw. -funktionen eingesetzt. Bekannt sind beispielsweise Kameras im Fahrzeuginnenraum hinter der Windschutzscheibe und mit Blickrichtung nach vorn zur Erfassung des Vorausbereichs vor dem Fahrzeug, Kameras im Seitenbereich zur Seitenraumerfassung sowie Kameras im Heckbereich des Fahrzeugs zur Rückraumbeobachtung. Weiterhin sind bereits Systeme bekannt, die denen mittels mehrerer Kameras das gesamte Umfeld des Fahrzeug erfasst wird und insbesondere aus den mittels der Kameras erfassten Einzelbildern ein Gesamtbild der Fahrzeugumgebung generiert und den Fahrzeuginsassen zur Anzeige gebracht wird. Derartige Kamerasysteme werden auch als TopView-Systeme bezeichnet, bzw. als Rundumsicht-, Surround-View oder 360°-Sicht-System.

Im Rahmen der erfindungsgemäßen Vorrichtung und des erfindungsgemäßen Verfahrens können somit insbesondere bereits im Fahrzeug vorhandene Kameras und Bildverarbeitungseinrichtungen verwendet werden bzw. geeignet weitergebildet sein.

Die erfindungsgemäße Vorrichtung und das erfindungsgemäße Verfahren kommen bevorzugt in einem Fahrzeug zum Einsatz und dienen zur Bestimmung einer Stellung eines oder mehrerer Bauelemente des Fahrzeugs. Bei dem einen bzw. den mehreren Bauelementen des Fahrzeugs handelt es sich insbesondere um Bauelemente, die in ihrer Stellung verändert werden können und bei denen eine Veränderung der Stellung eine Änderung von äußeren Abmessungen des Fahrzeugs bewirkt. Die Bauelemente können beispielsweise im Außenbereich Fahrzeugs angeordnet sein und mechanisch oder elektromechanischen in ihrer Stellung verändert werden. Bei den Bauelementen handelt es sich somit insbesondere um bewegliche Fahrzeugteile. Darunter fallen beispielsweise ausfahrbare Bauelemente, wie Antennen, oder auch Bauelemente, die um eine Drehachse bewegbar sind, wie z.B. Fahrzeugtüren, Seitenspiegel und Kofferraum-/ Motorraumabdeckungen. Unter der Änderung der äußeren Abmessungen des Fahrzeugs ist insbesondere eine Änderung der äußeren Geometrie des Fahrzeugs, je nach Stellung des einen oder der mehreren Bauelemente, zu verstehen, beispielsweise der Breite, Länge und/oder Höhe des Fahrzeugs. Dabei kann es sich sowohl um eine Änderung der Gesamthöhe, der Gesamtlänge oder Gesamtbreite des Fahrzeugs handeln, d.h. der absoluten Abmessungen, oder auch um ein Änderung der relativen Abmessungen, d.h. bezogen auf einen bestimmten Bereich des Fahrzeugs, z.B. die Höhe im Bereich der Motorhaube oder die Breite im Bereich einer Fahrzeugtür. Unter der Änderung der äußeren Abmessungen des Fahrzeugs kann insbesondere auch allgemein eine Änderung der äußeren Fahrzeugkonturen verstanden werden. Beispielsweise führt eine Veränderung der Stellung einer Fahrzeugtür zu einer Veränderung der Fahrzeugbreite sowie zu einer Veränderung der seitlichen Fahrzeugkontur im entsprechenden Bereich.

Erfindungsgemäß werden mittels mehrerer Kameras Bilder aus der Fahrzeugumgebung erfasst, wobei die Kameras bevorzugt derart am Fahrzeug oder im Fahrzeug angeordnet sind, dass sich die einen oder mehreren Bauelemente im Blickfeld der Kameras befinden. Die Kameras können beispielsweise derart angeordnet und/oder ausgerichtet sein, dass sich das eine oder die mehreren Bauelemente in zumindest einer ihrer möglichen Stellungen im Blickfeld der Kameras befinden. Bei den Kameras kann es sich beispielsweise um wenigstens eine Kamera handeln, die im Fahrzeuginnenraum hinter der Windschutzscheibe angeordnet ist, mit Blickrichtung durch die Fahrzeugscheibe hindurch, zur Erfassung des in Fahrtrichtung liegenden Fahrzeugumfelds. Bei den Kameras kann es sich insbesondere auch um Seitenkameras handeln, die im linken bzw. rechten Außenbereich des Fahrzeugs angeordnet sind. Typische Verbauorte von Seitenkameras sind beispielweise die Außenspiegel oder die vorderen Radhäuser. Grundsätzlich kann auch jede andere Kamera in einem Fahrzeug verwendet werden, insbesondere Kameras, die bereits für andere Fahrerassistenzfunktionen bzw. Fahrerassistenzsystem im Fahrzeug vorhanden sind. Wichtig ist hierbei, dass die Kameras derart angeordnet bzw. ausgerichtet sind und/oder über spezielle Optik verfügen, beispielsweise mit einer Fischaugenoptik bzw. mit einem Fischaugenobjektiv (fisheye bzw. fisheye lens), so dass die eine oder mehreren Bauelemente in zumindest eine ihrer möglichen Stellungen im Blickfeld der jeweiligen Kamera liegen.

Erfindungsgemäß sind weiterhin Bildverarbeitungseinrichtungen vorgesehen, die derart ausgebildet sind, dass die von den Kameras erfassten Bilder mittels der Bildverarbeitungseinrichtungen verarbeitet werden und aus der Verarbeitung der Bilder die Stellung des einen oder der mehreren Bauelemente des Fahrzeugs bestimmt wird. Die Bestimmung der Stellung des einen oder der mehreren Bauelemente des Fahrzeugs erfolgt somit im Rahmen der Erfindung mittels Bildverarbeitung der Kamerabilder und vorzugsweise ohne weitere Sensoreinrichtungen. Hierbei können verschiedene Bildverarbeitungsverfahren zum Einsatz kommen, zum Beispiel Mustererkennungs- und/oder Mustervergleichsverfahren. Es können weiterhin, d.h. alternativ oder zusätzlich, Referenzbilder für verschiedene Stellungen des einen bzw. der mehreren Bauelemente, beispielsweise in einem Speicher, hinterlegt sein und im Rahmen der Bilderverarbeitung mit den erfassten Bildern verglichen werden. Handelt es sich bei den Kameras um Stereokameras bzw. um Kameras, mittels derer Tiefeninformationen gewonnen werden können, dann kann die Bestimmung der Stellung insbesondere auch anhand einer Ermittlung einer Veränderung des Abstandes bzw. anhand der Veränderung der Tiefeninformationen, betreffend das jeweilige Bauelement bzw. den Bereich in dem das jeweilige Bauelement befindet, erfolgen.

Gemäß einer bevorzugten Ausgestaltung der Erfindung, wird die Stellung wenigstens eines der folgenden Bauelemente bestimmt:
- Fahrzeugtür
- Tankdeckel
- Seitenspiegel
- Motorraumabdeckung
- Kofferraumabdeckung
- Antenne
- Schiebedach

Hierzu können insbesondere die Kameras geeignet angeordnet und/oder ausgerichtet und die Bildverarbeitungseinrichtungen geeignet ausgebildet sein, dass sich die entsprechenden Bauelemente im Blickfeld der Kameras befinden und mittels der Bildverarbeitung die Stellung der Bauelemente bestimmbar ist, beispielsweise indem die entsprechenden Referenzbilder für das jeweilige Bauelement in einem Speicher hinterlegt sind.

Gemäß einer weiteren bevorzugten Ausgestaltung der Erfindung, wird bei der Bestimmung der Stellung des einen bzw. der mehreren Bauelemente bestimmt, ob sich das jeweilige Bauelement in einem geöffneten oder geschlossenen Zustand befindet. Mittels der erfindungsgemäßen Lösung kann somit beispielsweise bestimmt werden, ob Fahrzeugtüren, Tankdeckel, etc. geöffnet oder geschlossen sind. Gemäß dieser Ausgestaltung wird somit insbesondere ausschließlich zwischen zwei Ausprägungen der Stellungen des jeweiligen Bauelements unterschieden, nämlich Zustand "offen" oder Zustand "geschlossen".

Erfindungsgemäß wird bei der Bestimmung der Stellung des einen bzw. der mehreren Bauelemente bestimmt, in welcher Stellung sich das jeweilige Bauelement zwischen zwei maximalen Stellungen befindet. Bei den zwei maximalen Stellungen handelt es sich insbesondere um zwei maximal erreichbare Ausprägungen der Stellung des Bauelements, die bei der Veränderung der Stellung des jeweiligen Bauelements erreichbar sind. Bei den maximalen Stellungen handelt es sich insbesondere um die Ausprägungen "geschlossen" und "vollständig geöffnet". Zwischen den maximalen Stellungen kann die Stellung des jeweiligen Bauelements beispielsweise als Grad des Öffnungszustandes bestimmt werden, beispielsweise stufenlos in prozentualer Gradangabe (z.B. von 0% (=geschlossen) bis 100% (=vollständig geöffnet)) oder beispielweise stufenweise (z.B. mit den Stufen: "geschlossen"; "zu einem Viertel geöffnet"; "zur Hälfte geöffnet"; "zu drei Vierteln geöffnet"; "vollständig geöffnet"). Vom Grad des Öffnungszustandes des jeweiligen Bauelements hängt insbesondere auch die Ausprägungen der Veränderung der äußeren Abmessungen des Fahrzeugs ab. Beispielsweise führt eine nur zur Hälfte geöffnete Fahrzeugtür zu einer geringeren Vergrößerung der Fahrzeugbreite, als eine vollständig geöffnete Fahrzeugtür. Dies kann wiederum Einfluss haben auf bestimmte Fahrerassistenzfunktionen, beispielsweise bei einer Durchfahrtsbestimmung für Engstellenbereiche. Ein wesentlicher Vorteil dieser Ausgestaltung der Erfindung ist die Tatsache, dass eine differenziertere Bestimmung der Stellung der Bauelemente möglich ist, als mit den bekannten Lösungen wie beispielsweise mit Kontaktschaltern. Damit ist auch eine differenziertere Bestimmung der Abmessungen des Fahrzeugs möglich, insbesondere für verschiedene Fahrerassistenzsysteme bzw. -funktionen.

Weiterhin werden erfindungsgemäß mittels mehrerer Kameras Bilder aus der Fahrzeugumgebung erfasst. Bei den mehreren Kameras handelt es sich dabei um Kameras eines Kamerasystems, bei dem mittels der mehreren Kameras Einzelbilder aus verschiedenen Bereichen der Fahrzeugumgebung erfasst und mittels Bildverarbeitungsmitteln geeignet transformiert werden, um hierdurch ein Gesamtbild der Fahrzeugumgebung zu generieren. Bei dem Kamerasystem, das im Rahmen der Erfindung und zur Bestimmung der Stellung von Bauelementen des Fahrzeugs zum Einsatz kommt, kann es sich somit um ein so genanntes TopView-System handeln. Bei der Bestimmung der Stellung des einen oder der mehreren Bauelemente wird dabei das Gesamtbild der Fahrzeugumgebung mittels der Bildverarbeitungseinrichtungen verarbeitet. Ein wesentlicher Vorteil in der Verwendung eines TopView-Systems und in der Verarbeitung des Gesamtbildes der Fahrzeugumgebung besteht darin, dass bei derartigen Systemen häufig ein Gesamtbild erzeugt wird, mittels welchem das Fahrzeug aus einer Draufsicht bzw. aus der Vogelperspektive darstellbar ist. Dabei wird aus den Bildern von realen Einzelkameras ein Gesamtbild aus der Perspektive einer virtuellen Kamera, die sich oberhalb des Fahrzeugs befindet, generiert. Die Stellung von Bauelementen, wie Fahrzeugtüren und Seitenspiegeln, ist in einem solchen Gesamtbild besonders gut und insbesondere jederzeit erkennbar. Darüber hinaus kann aus einem solchen Gesamtbild besonders leicht die genaue Ausprägung der Stellung, z.B. der Grad des Öffnungszustandes einer Fahrzeugtür, bestimmt werden.

Erfindungsgemäß können, in Abhängigkeit der bestimmten Stellung des einen oder der mehreren Bauelemente des Fahrzeugs, Hinweisen an Fahrzeuginsassen ausgegeben werden. Beispielsweise kann den Fahrzeuginsassen über geeignete Mittel ausgegeben werden, wenn Fahrzeugtüren, Tankdeckel, Motorraumabdeckungen und/oder Kofferraumabdeckungen geöffnet sind. Die Ausgabe kann insbesondere dann erfolgen, wenn der Fahrzeugführer das Fahrzeug in Bewegung setzt, obwohl sich das jeweilige Bauelement im geöffneten Zustand befindet. Die Ausgabe kann beispielweise akustisch, optisch und/oder haptisch erfolgen.

Erfindungsgemäß können weiterhin die Informationen über die mittels der Vorrichtung bzw. mittels des Verfahrens bestimmte Stellung des einen oder der mehreren Bauelemente im Rahmen von Fahrerassistenzfunktionen weiterverarbeitet werden. Beispielweise von Fahrerassistenzsystemen bei denen die Stellung des einen oder der mehreren Bauelemente bzw. die Veränderung der äußeren Fahrzeugkonturen relevant ist. Die Information über eine geöffnete Fahrzeugtür kann beispielsweise weiterhin verwendet werden, um zu erkennen, wenn Personen das Fahrzeug verlassen und dies über entsprechende Funktionen zu melden, beispielsweise wenn dies während der Fahrt erfolgt.

Wesentliche Vorteile der Erfindung bestehenden darin, dass spezielle Sensoren, wie zum Beispiel Kontaktschalter am Tankstutzen und an Fahrzeugtüren, entfallen können. Die erfindungsgemäße Bestimmung der Stellung der Bauelementen kann insbesondere auch zur Erzeugung von Redundanz herangezogen werden, d.h. die Bestimmung kann als unabhängige Instanz erfolgen, um die Funktion beispielsweise von Kontaktschaltern zu überprüfen. Das kann zum Beispiel für sicherheitskritische Fahrzeugfunktionen angewendet werden.

## Patentansprüche

1. Vorrichtung für ein Fahrzeug, zur Bestimmung einer Stellung eines oder mehrerer Bauelemente des Fahrzeugs, deren Stellung veränderbar ist und bei denen eine Veränderung der Stellung eine Änderung von äußeren Abmessungen des Fahrzeugs bewirkt, wobei die Vorrichtung wenigstens eine Kamera umfasst, mittels derer Bilder aus wenigstens einem Bereich der Fahrzeugumgebung erfasst werden und die derart am oder im Fahrzeug angeordnet ist, dass sich die einen oder mehreren Bauelemente im Blickfeld der Kamera befinden,
und wobei die Vorrichtung Bildverarbeitungseinrichtungen umfasst, die derart ausgebildet sind, dass
- die von der wenigstens einen Kamera erfassten Bilder mittels der Bildverarbeitungseinrichtungen verarbeitet werden, und
- aus der Verarbeitung der Bilder die Stellung des einen oder der mehreren Bauelemente des Fahrzeug bestimmt wird, wobei
- bei der Bestimmung der Stellung bestimmbar ist, in welcher Stellung sich das eine oder die mehreren Bauelemente zwischen zwei maximalen Stellungen befinden,
**dadurch gekennzeichnet, dass**
die Vorrichtung mehrere Kameras umfasst, wobei die Kameras Bestandteil eines Kamerasystems sind, bei dem mittels der mehreren Kameras Einzelbilder aus verschiedenen Bereichen der Fahrzeugumgebung erfasst und mittels Bildverarbeitungsmittel geeignet transformiert werden, um hierdurch ein Gesamtbild der Fahrzeugumgebung zu generieren, und wobei
die Bildverarbeitungseinrichtungen derart ausgebildet sind, dass bei der Bestimmung der Stellung des einen oder der mehreren Bauelemente das Gesamtbild der Fahrzeugumgebung verarbeitet wird.

2. Vorrichtung nach Anspruch 1, derart ausgebildet, dass die Stellung wenigstens eines der folgenden Bauelemente bestimmbar ist:
- Fahrzeugtür
- Tankdeckel
- Seitenspiegel
- Motorraumabdeckung
- Kofferraumabdeckung
- Antenne
- Schiebedach

3. Vorrichtung nach einem der vorangegangenen Ansprüche, derart ausgebildet, dass
bei der Bestimmung der Stellung bestimmbar ist, ob sich das eine oder die mehreren Bauelemente in einem geöffneten oder geschlossenen Zustand befinden.

4. Vorrichtung nach einem der vorangegangenen Ansprüche,
**dadurch gekennzeichnet, dass**
die Vorrichtung Mittel umfasst oder mit Mitteln verbunden ist, zur Ausgabe von Hinweisen an Fahrzeuginsassen über die Stellung des-einen oder der mehreren Bauelemente.

5. Vorrichtung nach einem der vorangegangenen Ansprüche,
**dadurch gekennzeichnet, dass**
die Vorrichtung Mittel umfasst oder mit Mitteln verbunden ist, welche Informationen über die Stellung des einen oder der mehreren Bauelemente im Rahmen von Fahrerassistenzfunktionen weiterverarbeiten.

6. Verfahren zur Bestimmung einer Stellung eines oder mehrerer Bauelemente eines Fahrzeugs, deren Stellung veränderbar ist und bei denen eine Veränderung der Stellung eine Änderung von äußeren Abmessungen des Fahrzeugs bewirkt, wobei
mittels wenigstens einer Kamera, die derart am oder im Fahrzeug angeordnet ist, dass sich die einen oder mehreren Bauelemente im Blickfeld der Kamera befinden, Bilder aus wenigstens einem Bereich der Fahrzeugumgebung erfasst werden und
mittels Bildverarbeitungseinrichtungen
- die von der wenigstens einen Kamera erfassten Bilder verarbeitet werden und
- aus der Verarbeitung der Bilder die Stellung des einen oder der mehreren Bauelemente des Fahrzeug bestimmt wird, wobei
- bestimmt wird, in welcher Stellung sich das eine oder die mehreren Bauelemente zwischen zwei maximalen Stellungen befinden,
**dadurch gekennzeichnet, dass**
mittels mehrerer Kameras Einzelbilder aus verschiedenen Bereichen der Fahrzeugumgebung erfasst und mittels Bildverarbeitungsmittel geeignet transformiert werden, um hierdurch ein Gesamtbild der Fahrzeugumgebung zu generieren, und
bei der Bestimmung der Stellung des einen oder der mehreren Bauelemente mittels der Bildverarbeitungseinrichtungen das Gesamtbild der Fahrzeugumgebung verarbeitet wird.

7. Verfahren nach Anspruch 6,
**dadurch gekennzeichnet, dass**
die Stellung wenigstens eines der folgenden Bauelemente bestimmt wird:
- Fahrzeugtür
- Tankdeckel
- Seitenspiegel
- Motorraumabdeckung
- Kofferraumabdeckung
- Antenne
- Schiebedach

8. Verfahren nach einem der Ansprüche 6 oder 7,
**dadurch gekennzeichnet, dass**
bestimmt wird, ob sich das eine oder die mehreren Bauelemente in einem geöffneten oder geschlossenen Zustand befinden.

9. Verfahren nach einem der Ansprüche 6 bis 8,
**dadurch gekennzeichnet, dass**
Hinweise an Fahrzeuginsassen über die Stellung des einen oder der mehreren Bauelemente ausgegeben werden.

10. Verfahren nach einem der Ansprüche 6 bis 9,
**dadurch gekennzeichnet, dass**
Informationen über die Stellung des einen oder der mehreren Bauelemente für eines oder mehrere Fahrerassistenzsysteme im Fahrzeug bereitgestellt werden.

## Claims

1. A device for a vehicle, for determining the position of one or more structural elements of the vehicle, the position of which can be changed and a change to the position of which alters the external dimensions of the vehicle, wherein the device comprises at least one camera, by means of which images from at least one region of the surroundings of the vehicle are acquired and which is arranged on or in the vehicle such that the one or more structural elements are located within the field of view of the camera, and wherein the device comprises image processing devices which are designed such that
- the images acquired by the at least one camera are processed by means of the image processing devices, and
- the position of the one or more structural elements of the vehicle is determined from the processing of the images, wherein
- on determining the position it can be determined in which position between two maximum positions the one or more structural elements are situated,
**characterized in that**
the device comprises a plurality of cameras, wherein the cameras are components of a camera system in which, by means of the plurality of cameras, individual images from various regions of the surroundings of the vehicle are acquired and suitably transformed by image processing means in order to generate an overall image of the surroundings of the vehicle thereby, and wherein
the image processing devices are designed such that on determining the position of the one or more structural elements the overall image of the surroundings of the vehicle is processed.

2. The device according to claim 1, designed such that the position of at least one of the following structural elements can be determined:
- vehicle door
- filler cap
- side mirror
- engine compartment cover
- luggage compartment cover
- antenna
- sliding sunroof

3. The device according to any one of the preceding claims, designed such that
on determining the position it can be determined whether the one or more structural elements are in an opened or closed state.

4. The device according to any one of the preceding claims,
**characterized in that**
the device comprises means or is connected to means for passing on notifications about the position of the one or more structural elements to passengers present in the vehicle.

5. The device according to any one of the preceding claims,
**characterized in that**
the device comprises means or is connected to means which further process the information on the position of the one or more structural elements in the context of driver assistance functions.

6. A method for determining the position of one or more structural elements of a vehicle, the position of which can be changed and a change to the position of which alters the external dimensions of the vehicle, wherein
by means of at least one camera, which is arranged on or in the vehicle such that the one or more structural elements are located within the field of view of the camera, images from at least one region of the surroundings of the vehicle are acquired and
by means of image processing devices
- the images acquired by the at least one camera are processed and
- the position of the one or more structural elements of the vehicle is determined from the processing of the images, wherein
- it is determined in which position between two maximum positions the one or more structural elements are situated,
**characterized in that**
individual images from various regions of the surroundings of the vehicle are acquired by means of a plurality of cameras and suitably transformed by image processing means in order to generate an overall image of the surroundings of the vehicle thereby, and
the overall image of the surroundings of the vehicle is processed on determining the position of the one or more structural elements by means of the image processing devices.

7. The method according to claim 6,
**characterized in that**
the position of at least one of the following structural elements is determined:
- vehicle door
- filler cap
- side mirror
- engine compartment cover
- luggage compartment cover
- antenna
- sliding sunroof

8. The method according to any one of claims 6 or 7,
**characterized in that**
it is determined whether the one or more structural elements are in an opened or closed state.

9. The method according to any one of claims 6 to 8,
**characterized in that**
notifications about the position of the one or more structural elements are passed on to passengers present in the vehicle.

10. The method according to any one of claims 6 to 9,
**characterized in that**
the information on the position of the one or more structural elements is made available to one or more driver assistance systems in the vehicle.

## Revendications

1. Dispositif pour un véhicule, destiné à la détermination d'une position d'un ou de plusieurs éléments structuraux du véhicule dont la position est modifiable et pour lesquels une modification de la position provoque une modification de dimensions extérieures du véhicule, le dispositif comprenant au moins une caméra, au moyen de laquelle des images peuvent être captées en provenance d'au moins une zone de l'environnement du véhicule et qui est disposée sur ou dans le véhicule de telle sorte que l'élément structural ou les plusieurs éléments structuraux se trouvent dans le champ de vision de la caméra,
et le dispositif comprenant des équipements de traitement d'images qui sont constitués de telle sorte que
- les images captées par la caméra au moins au nombre de un sont traitées au moyen des équipements de traitement d'images, et
- la position de l'élément structural ou des plusieurs éléments structuraux du véhicule est déterminée à partir du traitement des images,
- dans lequel, lors de la détermination de la position, il est possible de déterminer dans quelle position se trouvent l'élément structural ou les plusieurs éléments structuraux entre deux positions maximales,
**caractérisé en ce que**
le dispositif comprend plusieurs caméras, les caméras faisant partie intégrante d'un système de caméras dans lequel, au moyen des plusieurs caméras, des images individuelles en provenance de différentes zones de l'environnement du véhicule sont captées et transformées de façon appropriée au moyen de moyens de traitement d'images afin de générer ainsi une image globale de l'environnement du véhicule, et
les équipements de traitement d'images étant constitués de telle sorte que, lors de la détermination de la position de l'élément structural ou des plusieurs éléments structuraux, l'image globale de l'environnement du véhicule est traitée.

2. Dispositif selon la revendication 1, constitué de telle sorte que la position d'au moins un des éléments structuraux suivants peut être déterminée :
- porte du véhicule
- bouchon du réservoir
- rétroviseur latéral
- capot du compartiment moteur
- capot du coffre à bagages
- antenne
- toit ouvrant.

3. Dispositif selon l'une des revendications précédentes, constitué de telle sorte que,
lors de la définition de la position, il est possible de déterminer si l'élément structural ou les plusieurs éléments structuraux se trouvent dans un état ouvert ou fermé.

4. Dispositif selon l'une des revendications précédentes,
**caractérisé en ce que**
le dispositif comprend des moyens ou est raccordé à des moyens pour la délivrance d'indications à des occupants du véhicule sur la position de l'élément structural ou des plusieurs éléments structuraux.

5. Dispositif selon l'une des revendications précédentes,
**caractérisé en ce que**
le dispositif comprend des moyens ou est raccordé à des moyens qui traitent de façon complémentaire des informations sur la position de l'élément structural ou des plusieurs éléments structuraux dans le cadre de fonctions d'assistance au conducteur.

6. Procédé destiné à la détermination d'une position d'un élément structural ou de plusieurs éléments structuraux d'un véhicule dont la position est modifiable et pour lesquels une modification de la position provoque une modification de dimensions extérieures du véhicule,
des images en provenance d'au moins une zone de l'environnement du véhicule étant captées au moyen d'au moins une caméra qui est disposée sur ou dans le véhicule de telle sorte que l'élément structural ou les plusieurs éléments structuraux se trouvent dans le champ de vision de la caméra et, au moyen d'équipements de traitement d'images,
- les images captées par la caméra au moins au nombre de un sont traitées et,
- à partir du traitement des images, la position de l'élément structural ou des plusieurs éléments structuraux du véhicule est déterminée,
- la position dans laquelle se trouve l'élément structural ou les plusieurs éléments structuraux entre deux positions maximales étant déterminée,
**caractérisé en ce que**,
au moyen de plusieurs caméras, des images individuelles en provenance de différentes zones de l'environnement du véhicule sont captées et transformées de façon appropriée au moyen de moyens de traitement d'images afin de générer ainsi une image globale de l'environnement du véhicule, et
l'image globale de l'environnement du véhicule est traitée lors de la détermination de la position de l'élément structural ou des plusieurs éléments structuraux au moyen des équipements de traitement d'images.

7. Procédé selon la revendication 6,
**caractérisé en ce que**
la position d'au moins un des éléments structuraux suivants peut être déterminée :
- porte du véhicule
- bouchon du réservoir
- rétroviseur latéral
- capot du compartiment moteur
- capot du coffre à bagages
- antenne
- toit ouvrant.

8. Procédé selon l'une des revendications 6 ou 7,
**caractérisé en ce**
**qu'**il est déterminé si l'élément structural ou les plusieurs éléments structuraux se trouvent dans un état ouvert ou fermé.

9. Procédé selon l'une des revendications 6 à 8,
**caractérisé en ce que**
des indications sont délivrées à des occupants du véhicule sur la position de l'élément structural ou des plusieurs éléments structuraux.

10. Procédé selon l'une des revendications 6 à 9,
**caractérisé en ce que**
des informations sur la position de l'élément structural ou des plusieurs éléments structuraux sont fournies pour un ou plusieurs systèmes d'assistance au conducteur dans le véhicule.
